**Europäisches Patentamt**

**European Patent Office**

**Office européen des brevets**

(19)

(11) Veröffentlichungsnummer: **0 240 790**
**B1**

(12)

# EUROPÄISCHE PATENTSCHRIFT

(45) Veröffentlichungstag der Patentschrift:
**11.10.89**

(51) Int. Cl.⁴: **G02C 5/12**

(21) Anmeldenummer: **87103926.9**

(22) Anmeldetag: **18.03.87**

(54) **Padsystem.**

(30) Priorität: **19.03.86 DE 3609130**

(43) Veröffentlichungstag der Anmeldung:
**14.10.87 Patentblatt 87/42**

(45) Bekanntmachung des Hinweises auf die Patenterteilung:
**11.10.89 Patentblatt 89/41**

(84) Benannte Vertragsstaaten:
**DE FR GB IT**

(56) Entgegenhaltungen:
**DE-A- 2 064 970**
**DE-A- 2 545 683**
**DE-A- 3 043 216**
**DE-U- 8 600 080**
**GB-A- 2 132 379**

(73) Patentinhaber: **Marwitz & Hauser GmbH, Stuttgart,**
**Dornhaldenstrasse 5, D-7000 Stuttgart(DE)**

(72) Erfinder: **Labenz, Norbert, Besselhof 5,**
**D-3005 Hemmingen(DE)**
Erfinder: **Neef, Heinz, Plettenbergstrasse 42,**
**D-7000 Stuttgart 1(DE)**
Erfinder: **Rössner, Jürgen, Herdweg 94F,**
**D-7000 Stuttgart 1(DE)**

**Beschreibung**

Die vorliegende Erfindung betrifft ein Padsystem nach dem Oberbegriff des Anspruchs 1.

Solche Padsysteme werden verwendet, um Brillenfassungen, vorzugsweise Brillenfassungen aus Metall, deren Nasensteg nicht auf dem Nasenrücken des Brillenträgers aufliegt, im Bereich der Nasenwurzel abzustützen.

Es sind, beispielsweise aus der GB-PS 1 498 973, Padsysteme bekannt, bei denen die Nasen-Auflageplättchen, d.h. die Pads gelenkig am Padhebel befestigt sind, damit sie sich automatisch dem Verlauf der Nasenauflage anpassen können. Solche Padsysteme sind verhältnismäßig teuer und die Pads sind nur sehr schwer auswechselbar.

Ausgehend von der Erkenntnis, daß es völlig genügt die Pads einmal dem Verlauf der Nasenauflage anzupassen, werden zunehmend Padsysteme verwendet, bei denen die Pads fest mit dem Padhebel verbunden sind. Zum Anpassen werden die Padhebel solange verbogen, bis die gewünschte Auflage der Pads an der Nasenwurzel erreicht ist. Die Pads weisen bei solchen Systemen ein Sackloch auf, das entweder im Pad selbst oder in einem seitlich am Pad befestigten Teil vorgehen ist und in das unter Spannung der Endbereich des Padhebels eingeschoben wird. Eine derartige Verbindung reicht völlig aus; sie hat den Vorteil, daß die Pads durch Abziehen vom Padhebel einfach auswechselbar sind.

Um ein Rutschen der Pads und damit der Brillenfassung auf der Nase zu vermeiden, ist es aus der DE-PS 25 45 683 bekannt die Pads aus einem weichen Material mit physiologisch unbedenklichen Eigenschaften herzustellen, beispielsweise aus einem Silikon-Kautschuk einer Shore-D-Härte von 10 bis 30. Bei einem solchen Material bereitet die Verbindung mit einem Padhebel über ein im Pad angebrachtes Sackloch Schwierigkeiten, da die Gefahr besteht, daß der starre Padhebel den Pad durchstößt. Man hat diese Schwierigkeit nach der DE-PS 28 19 141 dadurch gemeistert, daß man das Sackloch in eine Hülse aus halbflexiblem Material, beispielsweise aus einem Polyamid eingebracht und diese Hülse in das weiche Padmaterial eingebettet hat.

Das Sackloch ist dabei im wesentlichen rechteckförmig ausgebildet und der Endbereich des Padhebels weist einen entsprechenden Querschnitt auf. Der Ausdruck "im wesentlichen rechteckförmig" ist dabei so zu verstehen, daß der Querschnitt von Sackloch und Padhebel länger als breit ist. Damit wird ein Verdrehen des auf den Padhebel aufgesteckten Pads verhindert.

Die bekannten Padsysteme ermöglichen es den anatomischen Gegebenheiten der Gesichtsformen Rechnung zu tragen, wie sie bei Menschen einer Rasse auftreten. Bei verschiedenen Völkern und Rassen treten jedoch insbesondere im Nasenflanken- und Nasenwurzelbereich derart typisch unterschiedliche anatomische Gegebenheiten auf, daß die Anforderungen an einen optimalen Sitz einer Brillenfassung nicht mit ein und demselben Padsystem erfüllt werden können. Als Beispiel sei hier die asiatische Gesichtsform genannt, bei welcher der Nasenwurzelbereich breiter und weniger hoch ist als bei der typisch europäischen Gesichtsform.

Man ist dieser Schwierigkeit bisher dadurch begegnet, daß man für verschiedene typische Gesichtsformen unterschiedliche Padsysteme vorgesehen hat. Dies bedingt natürlich zusätzlichen Aufwand bei der Fertigung, Lagerhaltung und bei Steuerung der Lieferung von Brillenfassungs-Modellen, die zum weltweiten Vertrieb vorgesehen sind.

Es ist nun die Aufgabe der vorliegenden Erfindung ein Padsystem zu schaffen, das ohne Änderung einen weltweiten Vertrieb eines damit ausgerüsteten Brillenfassungs-Modells ermöglicht und das in sehr einfacher Weise an die anatomischen Gegebenheiten unterschiedlicher Gesichtsformen angepaßt werden kann.

Die Lösung dieser Aufgabe erfolgt mit einem Padsystem nach dem Oberbegriff des Anspruchs 1, bei dem erfindungsgemäß die Längsachsen der Querschnitte von Sackloch und Pad einen spitzen Winkel miteinander bilden.

Der Pad selbst hat einen symmetrischen Querschnitt, d.h. seine beiden Flächen haben dieselbe Gestalt und können beide als Flächen für die Auflage der Pads auf den Nasenseitenflächen verwendet werden.

Das neue Padsystem ermöglicht es den Nasenwinkel, d.h. den Winkel, den die Auflageflächen der Pads mit der Fassungsebene der Brillenfassung bilden durch einfaches Umstecken der Pads bei gleichbleibender Winkelstellung der Padaufnahme, d.h. des Padhebelendes zu verändern. Beim Aufstecken des Pads in einer ersten Position addiert sich der Neigungswinkel, den die Längsachsen der Querschnitte von Sackloch und Pad bilden zu dem, durch die Winkelstellung des Padhebelendes vorgegebenen Winkel; beim Aufstecken des Pads nach Drehung um 180° subtrahiert sich der Neigungswinkel. Damit läßt sich das Padsystem sehr einfach auf unterschiedliche Nasenwinkel einstellen.

Das Sackloch im Pad kann parallel zur Mittenachse des Pads verlaufen. Besonders vorteilhaft ist es das Sackloch geneigt zur Mittenachse verlaufen zu lassen. Damit läßt sich das Padsystem wahlweise an besonders breite und flache oder an besonders schmale und steile Nasenwurzeln anpassen.

Von besonderem Vorteil ist es das Sackloch außerhalb der Mittenachse des Pads anzuordnen. Damit ergeben sich zusätzliche Möglichkeiten unterschiedlichen anatomischen Gegebenheiten der Gesichtsform Rechnung zu tragen.

So ist es möglich die Pads ohne Drehung vom linken auf den rechten Padhebel umzustecken und umgekehrt. Dabei bleibt der Nasenwinkel erhalten, während der Abstand der Pads von den Augenrändern der Fassung und damit die Auflagehöhe der Fassung verändert wird.

Werden die Pads beim Umwechseln auf den anderen Padhebel zusätzlich um 180° gedreht, so wird der Nasenwinkel geändert, während die Auflage höhe der Fassung unverändert bleibt.

Schließlich können die Pads dem jeweiligen Padhebel zugeordnet bleiben, jedoch in zwei, um 180° gegeneinander gedrehten Positionen aufgesteckt werden. Dabei werden sowohl der Nasenwinkel als auch die Auflagehöhe der Fassung auf den Nasenseitenflächen geändert.

Aus diesen Ausführungen wird deutlich, daß das Padsystem nach der Erfindung sehr unterschiedlichen anatomischen Gegebenheiten der Gesichtsform angepaßt werden kann, ohne daß fassungsseitig irgendwelche Änderungen notwendig sind.

Um eine weitere Variation zu ermöglichen, kann der Pad bezüglich seiner Mittenachse symmetrisch oder unsymmetrisch ausgebildet sein.

Es können auch Pads vorgesehen sein, die bezüglich der Neigung und/oder des Verlaufs der Sacklochbohrung unterschiedlich sind und deren Verwendung eine weitere Feinanpassung des Padsystems ermöglicht.

Die Pads des Padsystems nach der Erfindung können aus einem einheitlichen Werkstoff bestehen, der eine solche Härte aufweist, daß eine einwandfreie und sichere Verbindung mit dem Padhebel gewährleistet ist. Besonders vorteilhaft und benutzerfreundlich ist es die Pads aus einem weichen, hautsympathischen Material, beispielsweise aus Silikon-Kautschuk herzustellen, in das eine, mit dem Sackloch versehene Hülse aus halbflexiblen Material eingebettet ist. Dies bringt, abgesehen von den verbesserten Trageeigenschaften den Vorteil mit sich, daß sich das weiche Material der Nasenform anschmiegt, d.h. von sich aus eine vollständige Fein-Anpassung der Pads bewirkt.

Die Erfindung wird im folgenden anhand der Fig. 1-10 der beigefügten Zeichnungen näher erläutert. Im einzelnen zeigen:

Fig. 1 ein Ausführungsbeispiel eines Pads in Ansicht;
Fig. 2 einen Schnitt entlang der Linie II-II der Fig. 1;
Fig. 3 ein Ausführungsbeispiel einer mit dem Padsystem nach der Erfindung ausgerüsteten Brillenfassung, gesehen von der Augenseite des Brillenträgers aus;
Fig. 4a eine seitliche Teilansicht der Fassung der Fig. 3 mit aufgestecktem Pad;
Fig. 4b einen Teilschnitt entlang der Linie IVb-IVb der Fig. 4a;
Fig. 5a eine Teilansicht der Fassung der Fig. 3, bei der der Pad um 180° gedreht aufgesteckt ist;
Fig. 5b einen Teilschnitt entlang der Linie Vb-Vb der Fig. 5a;
Fig. 6 ein anderes Ausführungsbeispiel eines Pads in Ansicht;
Fig. 7 eine seitliche Teilansicht der Fassung der Fig. 3 mit aufgestecktem Pad nach Fig. 6;
Fig. 8 eine der Fig. 7 entsprechende Teilansicht, bei der der Pad um 180° gedreht aufgesteckt ist;
Fig. 9a und b zwei Ansichten von Pads, die bezüglich ihrer Mittenachse und b symmetrisch sind;
Fig. 10 eine Ansicht eines aus weichem Material hergestellten Pads.

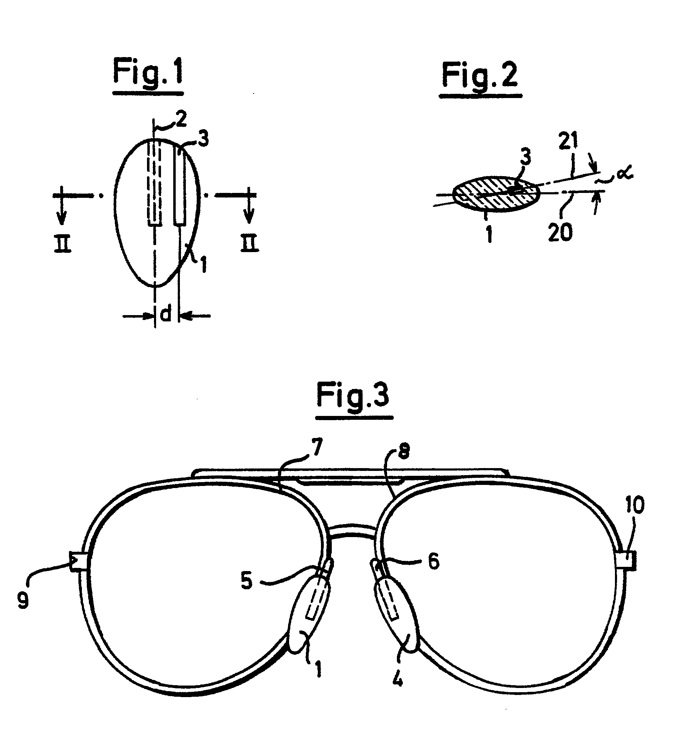

Fig. 1 zeigt einen Pad (1), dessen Mittenachse mit (2) bezeichnet ist. Bei üblichen Padsystemen ist eine entlang der Mittenachse (2) verlaufende Sacklochbohrung vorgesehen, die in Fig. 1 gestrichelt angedeutet ist und die zur Aufnahme des Padhebels dient. Der Pad (1) des dargestellten Ausführungsbeispiels ist mit einem Sackloch (3) versehen, das einen Abstand (d) zur Mittenachse (2) aufweist. Wie der in Fig. 2 dargestellte Querschnitt durch den Pad (1) zeigt hat das Sackloch (3) einen rechteckförmigen Querschnitt und ist so angeordnet, daß seine Längsachse (21) mit der Querschnittsachse (20) des Pads (1) einen spitzen Winkel (α) einschließt.

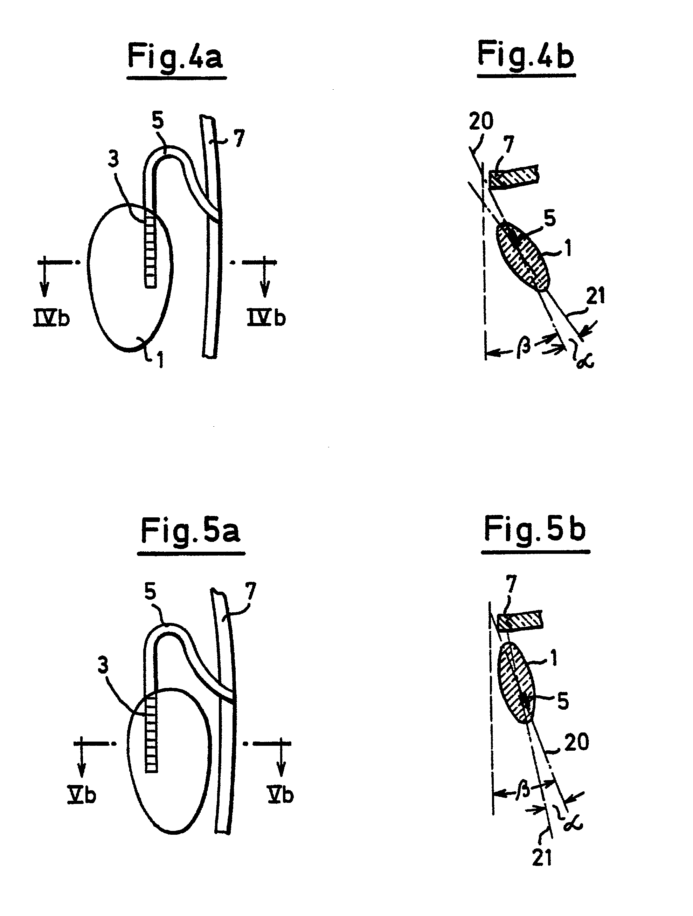

Fig. 3 zeigt ein Ausführungsbeispiel einer Brillenfassung mit den zur Aufnahme der Korrektionsgläser dienenden Augenfassungen (7 und 8), an die seitlich die Brillenbügel (9 und 10) angelenkt sind. Mit den Augenrändern (7 und 8) sind Padhebel (5 und 6) fest verbunden, deren Form aus den Figuren 4a und 5a ersichtlich ist. Die freien Enden der Padhebel (5) und (6) haben einen rechteckförmigen Querschnitt, der nach dem Aufschieben der Pads (1) und (4) von deren Sacklochbohrungen so fest umschlossen ist, daß ein Rutschen der Pads nicht möglich ist.

Im Ausführungsbeispiel der Fig. 4a ist der Pad (1) so auf das freie Ende des Padhebels (5) aufgesteckt, daß sein vom Sackloch (3) aus gesehen größerer Flächenbereich dem Augenrand (7) abgewandt ist.

Der Schnitt der Fig. 4b zeigt, daß sich im dargestellten Beispiel der aus Fig. 2 ersichtliche Neigungswinkel (α) der Sacklochbohrung (3) zu dem vom Padhebel (5) vorgegebenen Winkel (β) addiert, so daß sich der Nasenwinkel (α + β) ergibt. Der Abstand zwischen dem Pad (1) und dem Augenrand (7) der Fassung ist relativ groß und damit auch die Auflagehöhe der Fassung auf den Nasenseitenflächen.

In der Darstellung der Fig. 5a ist der Pad (1) um 180° um seine Mittenachse (2) gedreht und in dieser Position auf das freie Ende des auch in Fig. 4a gezeigten Padhebels (5) aufgesteckt. Der Schnitt der Fig. 5b zeigt, daß sich jetzt der Neigungswinkel (α) der Sacklochbohrung (3) von dem vom Padhebel (5) vorgegebenen Winkel (β) subtrahiert, so daß sich der Nasenwinkel (β-α) ergibt. Der Abstand zwischen dem Pad (1) und dem Augenrand (7) der Fassung und damit auch die Auflagehöhe der Fassung auf den Nasenseitenflächen ist gegenüber der Position der Fig. 4 deutlich verkleinert.

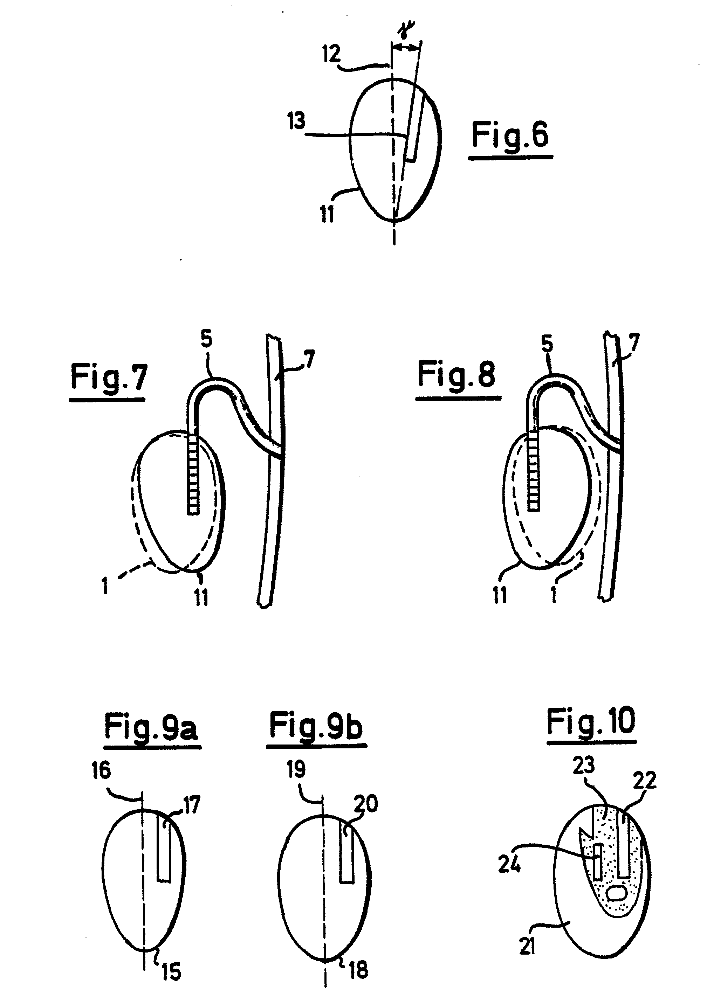

Fig. 6 zeigt ein Ausführungsbeispiel eines Pads (11) mit einem Sackloch (13), das um einen Winkel (γ) geneigt zur Mittenachse (12) verläuft. Der Winkel (γ) kann beispielsweise 10° betragen.

In Fig. 7 ist der Pad (11) in einer Position auf das Ende des Padhebels (5) aufgesteckt. Zum Vergleich ist die Position eines gemäß Fig. 1 ausgebildeten Pads (1) gestrichelt eingezeichnet. Wird der Pad (11) um 180° um seine Mittenachse (12) gedreht und dann auf das Ende des Padhebels (5) aufgesteckt, so ergibt sich die Position der Fig. 8. Auch hier ist die entsprechende Position des Pads (1) zum Vergleich gestrichelt eingezeichnet.

In Fig. 9a ist ein Pad (15) gezeigt, dessen äußere Form bezüglich der Mittenachse (16) symmetrisch ist. Das Sackloch (17) ist außerhalb dieser Mittenachse angeordnet. Auch der in Fig. 9b gezeigte Pad (18) mit dem Sackloch (20) ist in seiner äußeren Form bezüglich der Mittenachse (19) symmetrisch.

Der in Fig. 10 dargestellte Pad (21) ist aus glasklarem weichem Material, beispielsweise aus einem Silikon-Kautschuk hergestellt. Das Sackloch (22) ist in einer Hülse (23) angeordnet, die im Pad (21) eingebettet ist, beispielsweise in diesem eingegossen ist. Die Ausnehmungen (24) in der Hülse (23) dienen zur Befestigung der Hülse (23) im Pad (21). Auch der Weich-Pad nach Fig. 10 ist mit einem geneigten Sackloch nach Fig. 2 ausgerüstet. Das Sackloch (22) kann auch den geneigten Verlauf gemäß Fig. 6 haben. Der Weich-Pad (21) selbst kann eine, bezüglich seiner Mittenachse symmetrische oder unsymmetrische Außenform haben.

Wie insbesondere die Figuren 4a, 5a, 7 und 8 zeigen hat bei dem neuen Padsystem der Padhebel (5) einen Abstand vom Augenrand (7) der Fassung welcher etwas größer ist als der entsprechende Abstand bei Padsystemen nach dem Stand der Technik. Ein solcher etwas größerer Abstand ist notwendig, um ein gedrehtes Einsetzen der Pads (1) entsprechend der Figuren 4a und 5a zu ermöglichen.

Eine Brillenfassung der Fig. 3 kann zusammen mit Pads gemäß Fig. 1 oder Fig. 6 verwendet werden je nachdem welche anatomischen Gegebenheiten der Gesichtsform des Brillenträgers vorliegen. Die Pads können wahlweise eine unsymmetrische Außenform haben oder gemäß Fig. 9 symmetrisch ausgebildet sein.

## Patentansprüche

1. Padsystem mit einem, im Bereich der Nasenwurzel des Brillenträgers an einer Brillenfassung befestigten Padhebel (5, 6) und einem Pad (1, 4, 11, 15, 18, 21), der mit einem im wesentlichen rechteckförmigen Sackloch (3, 13, 17, 20, 22) zur Befestigung des Pads an dem, mit einem der Sacklochform entsprechenden Querschnitt versehenen Endbereich des Padhebels versehen ist, dadurch gekennzeichnet, daß die Längsachsen (21, 20) der Querschnitte von Sackloch (3, 13, 17, 20, 22) und Pad (1, 4, 11, 15, 18, 21) einen spitzen Winkel ($\alpha$) miteinander bilden.

2. Padsystem nach Anspruch 1, dadurch gekennzeichnet, daß der Pad (1, 4, 11, 15, 18, 21) einen symmetrischen Querschnitt hat.

3. Padsystem nach Anspruch 1 und 2, dadurch gekennzeichnet, daß das Sackloch (3, 17, 20, 22) parallel zur Mittenachse (2, 16, 19) des Pads (1, 4, 15, 18, 21) verläuft.

4. Padsystem nach Anspruch 1 und 2, dadurch gekennzeichnet, daß das Sackloch (13) geneigt zur Mittenachse (12) des Pads (11) verläuft.

5. Padsystem nach Anspruch 1 und 2 sowie Anspruch 3 oder 4, dadurch gekennzeichnet, daß das Sackloch (3) außerhalb der Mittenachse (2) des Pads (1) angeordnet ist.

6. Padsystem nach Anspruch 1 und 2 und einem der Ansprüche 3 bis 5, dadurch gekennzeichnet, daß der Pad (15, 18) bezüglich seiner Mittenachse (16, 19) symmetrisch ist.

7. Padsystem nach Anspruch 1 und 2 und einem der Ansprüche 3 bis 5, dadurch gekennzeichnet, daß der Pad (1, 11) bezüglich seiner Mittenachse (2, 12) unsymmetrisch ist.

8. Padsystem nach Anspruch 1 und einem oder mehreren der folgenden, dadurch gekennzeichnet, daß der Pad (21) aus einem weichen Material mit physiologisch unbedenklichen Eigenschaften besteht, in das eine, mit dem Sackloch (22) versehene Hülse (23) aus halbflexiblem Material eingebettet ist.

## Revendications

1. Système de plaquette comprenant un bras de plaquette (5, 6) fixé à une monture de lunettes dans la région de la racine du nez du porteur de lunettes et une plaquette (1, 4, 11, 15, 18, 21) pourvue d'un trou borgne (3, 13, 17, 20, 22) de forme essentiellement rectangulaire en section pour la fixation de la plaquette sur la partie terminale du bras de plaquette, dotée d'une section correspondant à celle du trou borgne, caractérisé en ce que les axes longitudinaux (21, 20) des sections droites du trou borgne (3, 13, 17, 20, 22) et de la plaquette (1, 4, 11, 15, 18, 21) renferment entre eux un angle aigu ($\alpha$).

2. Système selon la revendication 1, caractérisé en ce que la plaquette (1, 4, 11, 15, 19, 21) possède une section droite symétrique.

3. Système selon les revendications 1 et 2, caractérisé en ce que le trou borgne (3, 17, 20, 22) s'étend parallèlement à l'axe médian (2, 16, 19) de la plaquette (1, 4, 15, 18, 21).

4. Système selon les revendications 1 et 2, caractérisé en ce que le trou borgne (13) est incliné sur l'axe médian (12) de la plaquette (11).

5. Système selon les revendications 1 et 2, ainsi que 3 ou 4, caractérisé en ce que le trou borgne (3) est disposé en dehors de l'axe médian (2) de la plaquette (1).

6. Système selon les revendications 1 et 2 et une des revendications 3 à 5, caractérisé en ce que la plaquette (15, 18) est symétrique par rapport à son axe médian (16, 19).

7. Système selon les revendications 1 et 2 et une des revendications 3 à 5, caractérisé en ce que la plaquette (1, 11) est dissymétrique par rapport à son axe médian (2, 12).

8. Système selon la revendication 1 et une ou plusieurs des revendications suivantes, caractérisé en ce que la plaquette (21) est faite d'un matériau souple ayant des caractéristiques qui ne présentent physiologiquement aucun inconvénient et dans lequel est incorporé un manchon (23) en matériau semi-flexible, qui est pourvu du trou borgne (22).

## Claims

1. Pad system comprising a pad arm (5, 6) attached to the spectacle frame in the region of the root of the nose of the spectacle wearer, and a pad (1, 4, 11, 15, 18, 21) which is equipped with a blind hole (3, 13, 17, 20, 22) having a substantially rectangular cross section and serving to fix the pad onto the end portion of said pad arm having an arm cross section corresponding to said hole cross section, characterized in that the longitudinal axes (21, 20) of the cross sections of said blind hole (3, 13, 17, 20, 22) and said pad (1, 4, 11, 15, 18, 21) conjointly define an acute angle (α).

2. Pad system according to claim 1, characterized in that said pad (1, 4, 11, 15, 18, 21) has a symmetrical cross section.

3. Pad system according to claims 1 and 2, characterized in that said blind hole (3, 17, 20, 21) extends parallel to the longitudinal middle axis (2, 16, 19) of the pad (1, 4, 15, 18, 21).

4. Pad system according to claims 1 and 2, characterized in that said blind hole (13) extends in a direction inclined with respect to the middle axis (12) of the pad (11).

5. Pad system according to claims 1 and 2 and claim 3 or 4, characterized in that said blind hole (13) is arranged outside of the middle axis (2) of the pad (1).

6. Pad system according to claims 1 and 2 and one of the claims 3 to 5, characterized in that said pad (15, 18) is symmetrical with respect to its middle axis (16, 19).

7. Pad system according to claims 1 and 2 and one of the claims 3 to 5, characterized in that said pad (1, 11) is asymmetrical with respect to its middle axis (2, 12).

8. Pad system according to claim 1 and one or more of the following claims, characterized in that said pad (21) is made of a soft material having physiologically harmless characteristics, in which a sleeve (23) defining said blind hole (22) and being made of semi-flexible material is embedded.

## Fig.1

## Fig.2

## Fig.3

Fig.4a

Fig.4b

Fig.5a

Fig.5b

12

13

11

**Fig.6**

**Fig.7**

5

7

1

11

**Fig.8**

5

7

11

1

**Fig.9a**

16

17

15

**Fig.9b**

19

20

18

**Fig.10**

23

22

24

21